# EUROPEAN PATENT APPLICATION

(11) **EP 4 625 767 A1**
(43) Date of publication of application: **01.10.2025**
(21) Application number: 25165967.8
(22) Date of filing: 25.03.2025
(51) Int. Cl.: H02K 1/20, H02K 9/19, H02K 9/197, H02K 41/03, H02K 3/48, H02K 1/18

(54) **LINEAR MOTOR, ELECTROMAGNETIC SUSPENSION, AND VEHICLE**

(30) Priority: 29.03.2024 CN 202410385096
(71) Applicant: BYD Company Limited, Shenzhen, Guangdong 518118 (CN)
(72) Inventor: MA, Bingqing, Shenzhen 518118 (CN); LIU, Jun, Shenzhen 518118 (CN); QI, Wenming, Shenzhen 518118 (CN)
(74) Representative: Mathys & Squire

(57) **Abstract**

The present disclosure discloses a linear motor, an electromagnetic suspension, and a vehicle. The linear motor includes: a primary assembly and a conductive component. The primary assembly includes a core shaft and a winding component sleeved outside the core shaft. The core shaft includes a shaft wall and a first chamber surrounded by the shaft wall. A cooling water channel is arranged in the shaft wall. The conductive component is arranged in the first chamber. The conductive component is electrically connected to the winding component and a motor controller respectively. In this way, the cooling water channel and the conductive component are both arranged in the core shaft, which is conducive to improving space utilization of the core shaft, and is conducive to achieving a miniaturized design of the linear motor. The cooling water channel is defined by the shaft wall of the core shaft, which improves integration of the core shaft. There is no need to arrange an additional tube. Moreover, the cooling water channel has good sealing performance, which can effectively avoid liquid leakage of the cooling water channel, and improve an isolation effect between the conductive component and a coolant. In addition, the coolant can exchange heat with the conductive component and the winding component at the same time, thereby improving heat dissipation effects of the conductive component and the winding component.

## Description

### FIELD

The present disclosure relates to the technical field of vehicles, and specifically, to a linear motor, an electromagnetic suspension, and a vehicle.

### BACKGROUND

In the related art, a separate tube is usually arranged in a stator core shaft to form a cooling water channel. The sealing performance of the tube cannot be ensured, and a risk of liquid leakage exists. As a result, the safety of a linear motor cannot be ensured.

### SUMMARY

The present disclosure aims to resolve at least one of the technical problems in the prior art. Therefore, the present disclosure provides a linear motor. The linear motor has a simple structure and a cooling water channel has good sealing performance, which can improve the safety of the linear motor.

The linear motor according to the present disclosure includes: a primary assembly and a conductive component. The primary assembly includes a core shaft and a winding component sleeved outside the core shaft. The core shaft includes a shaft wall and a first chamber surrounded by the shaft wall. A cooling water channel is arranged in the shaft wall. The conductive component is arranged in the first chamber. An end of the conductive component is connected to the winding component. The other end of the conductive component is electrically connected to a motor controller.

According to the linear motor of the present disclosure, the cooling water channel and the conductive component are both arranged in the core shaft, which is conducive to improving space utilization of the core shaft, making the structure of the core shaft more compact, and is conducive to achieving a miniaturized design of the linear motor. The cooling water channel is defined by the shaft wall of the core shaft, which improves integration of the core shaft. There is no need to arrange an additional tube, which is conducive to achieving a lightweight design of the linear motor, and can simplify the components of the linear motor. Moreover, the cooling water channel has good sealing performance, which can effectively avoid liquid leakage of the cooling water channel, improve an isolation effect between the conductive component and a coolant, and improve the safety of the linear motor. In addition, the coolant can exchange heat with the conductive component and the winding component at the same time, thereby improving heat dissipation effects of the conductive component and the winding component.

According to some embodiments of the present disclosure, the cooling water channel is provided with a liquid inlet and a liquid outlet.

According to some embodiments of the present disclosure, the liquid inlet and the liquid outlet are located on a same end surface of the core shaft.

According to some embodiments of the present disclosure, the cooling water channel includes a first cooling channel and a second cooling channel. The first cooling channel is configured to exchange heat with the conductive component. The second cooling channel is configured to exchange heat with the winding component.

According to some embodiments of the present disclosure, the core shaft includes a first shaft section and a second shaft section. A shaft diameter of the first shaft section is greater than a shaft diameter of the second shaft section. The conductive component is arranged in the first shaft section. The winding component is sleeved on the second shaft section. The first cooling channel is arranged on the first shaft section. The second cooling channel is arranged on the second shaft section.

According to some embodiments of the present disclosure, the first cooling channel is in communication with the second cooling channel.

According to some embodiments of the present disclosure, the first cooling channel includes a first water inlet section and a first water outlet section. The second cooling channel includes a plurality of second water inlet sections and a plurality of second water outlet sections. An end of the first water inlet section is in communication with first ends of the plurality of second water inlet sections. Second ends of the plurality of second water inlet sections are in communication with first ends of the plurality of second water outlet sections. Second ends of the plurality of second water outlet sections are in communication with the first water outlet section.

According to some embodiments of the present disclosure, a center angle corresponding to two circumferential ends of each of the plurality of second water inlet sections is greater than a center angle corresponding to two circumferential ends of the first water inlet section; and/or a center angle corresponding to two circumferential ends of each of the plurality of second water outlet sections is greater than a center angle corresponding to two circumferential ends of the first water outlet section.

According to some embodiments of the present disclosure, a water inlet converging section is arranged between the first water inlet section and the plurality of second water inlet sections, and the first water inlet section is circumferentially close to a side of the water inlet converging section; and/or a water outlet converging section is arranged between the first water outlet section and the plurality of second water outlet sections, and the first water outlet section is circumferentially close to a side of the water outlet converging section.

According to some embodiments of the present disclosure, a first rib is arranged between two adjacent second water inlet sections; and/or a second rib is arranged between two adjacent second water outlet sections; and/or a third rib is arranged between the adjacent second water inlet section and second water outlet section.

According to some embodiments of the present disclosure, the first chamber is provided with a first positioning portion. The conductive component is provided with a first positioning fit portion. The first positioning portion is in positioning fit with the first positioning fit portion to limit a circumferential rotation freedom degree of the conductive component.

According to some embodiments of the present disclosure, one of the first positioning portion and the first positioning fit portion is configured as a positioning protrusion, and the other is configured as a positioning groove.

According to some embodiments of the present disclosure, an end portion of the first chamber is provided with a fixing protrusion. The linear motor includes a first fixing connection member. The first fixing connection member runs through the fixing protrusion to be fixed to the conductive component.

According to some embodiments of the present disclosure, the fixing protrusion and the core shaft are an integrally formed piece.

According to some embodiments of the present disclosure, a lead-out wire of the winding component is located on a radial outer side of the core shaft. The linear motor further includes an electrical connection member. The shaft wall of the core shaft is formed with a communication hole. The electrical connection member runs through the communication hole and is electrically connected to the lead-out wire and the conductive component respectively.

According to some embodiments of the present disclosure, the communication hole is located at a bottom of the first chamber.

According to some embodiments of the present disclosure, the linear motor further includes a secondary assembly and a detection device. The secondary assembly is coupled to the primary assembly. The secondary assembly is movable relative to the primary assembly. The detection device is configured to detect a position of the secondary assembly.

According to some embodiments of the present disclosure, the detection device includes a sensing member and a read head. The sensing member is arranged on the core shaft. The read head is arranged on the secondary assembly. The read head is coupled to the sensing member to detect the position of the secondary assembly.

According to some embodiments of the present disclosure, an outer peripheral wall of the core shaft is provided with a placement groove. The sensing member is placed in the placement groove.

According to some embodiments of the present disclosure, the placement groove is staggered with the cooling water channel.

Another objective of the present disclosure is to provide an electromagnetic suspension.

The electromagnetic suspension includes the foregoing linear motor.

The electromagnetic suspension has the same advantages as the foregoing linear motor, and details are not described herein again.

Another objective of the present disclosure is to provide a vehicle.

The vehicle includes the foregoing electromagnetic suspension.

The vehicle has the same advantages as the foregoing electromagnetic suspension, and details are not described herein again.

Additional aspects and advantages of the present disclosure will be set forth, in part, from the following description, and in part will become apparent from the following description or may be learned from practice of the present disclosure.

### BRIEF DESCRIPTION OF THE DRAWINGS

The foregoing and/or additional aspects and advantages of the present disclosure will become apparent and comprehensible from the following description of the embodiments with reference to the following accompanying drawings.
FIG. 1 is a cross-sectional view 1 of a primary assembly cooperating with a conductive component according to an embodiment of the present disclosure;
FIG. 2 is a cross-sectional view 2 of a primary assembly cooperating with a conductive component according to an embodiment of the present disclosure;
FIG. 3 is a schematic structural diagram 1 of a core shaft according to an embodiment of the present disclosure;
FIG. 4 is a schematic structural diagram 2 of a core shaft according to an embodiment of the present disclosure;
FIG. 5 is a schematic structural diagram 3 of a core shaft according to an embodiment of the present disclosure;
FIG. 6 is an axial cross-sectional view 1 of a core shaft according to an embodiment of the present disclosure;
FIG. 7 is an axial cross-sectional view 2 of a core shaft according to an embodiment of the present disclosure;
FIG. 8 is an enlarged view of A in FIG. 7;
FIG. 9 is a schematic structural diagram 4 of a core shaft according to an embodiment of the present disclosure;
FIG. 10 is a cross-sectional view of FIG. 9 along B-B;
FIG. 11 is a cross-sectional view of FIG. 9 along C-C;
FIG. 12 is a cross-sectional view of FIG. 9 along D-D;
FIG. 13 is a model diagram 1 of a cooling water channel according to an embodiment of the present disclosure;
FIG. 14 is a model diagram 2 of a cooling water channel according to an embodiment of the present disclosure;
FIG. 15 is a model diagram 3 of a cooling water channel according to an embodiment of the present disclosure;
FIG. 16 is a schematic structural diagram 1 of a conductive component according to an embodiment of the present disclosure;
FIG. 17 is a schematic structural diagram 2 of a conductive component according to an embodiment of the present disclosure;
FIG. 18 is a schematic structural diagram 3 of a conductive component according to an embodiment of the present disclosure;
FIG. 19 is a schematic structural diagram 4 of a conductive component according to an embodiment of the present disclosure; and
FIG. 20 is a schematic structural diagram 5 of a conductive component according to an embodiment of the present disclosure.

In the drawings:
Primary assembly 1; Core shaft 11; Shaft wall 111; First chamber 112; First shaft section 113; Second shaft section 114; Placement groove 115; First rib 116; Second rib 117; Third rib 118;
Winding component 12; Lead-out wire 121;
Cooling water channel 13; Liquid inlet 131; Liquid outlet 132;
First cooling channel 133; First water inlet section 1331; First water outlet section 1332;
Second cooling channel 134; Second water inlet section 1341; Second water outlet section 1342; Communication section 135; Flow guide section 136; Water inlet converging section 137; Water outlet converging section 138;
First positioning portion 14; Fixing protrusion 15; Communication hole 16; Wire outlet hole 17;
Conductive component 2; First positioning fit portion 21; Connection portion 22; Connection groove 23; Avoidance groove 24;
First fixing connection member 3; Electrical connection member 4; Electrical plug connector 5; and
Sensing member 61.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments that are described with reference to the accompany drawings are exemplary, and are only used to interpret the present disclosure, instead limiting the present disclosure.

In the description of the present disclosure, it is to be understood that orientation or position relationships indicated by the terms such as "center", "top", "bottom", "inner", "outer", "axial", "radial", and "circumferential" are based on orientation or position relationships shown in the accompanying drawings, and are used only for ease and brevity of illustration and description in the present disclosure, rather than indicating or implying that the mentioned device or component needs to have a particular orientation or needs to be constructed and operated in a particular orientation. Therefore, such terms are not to be construed as limiting of the present disclosure. In addition, a feature defined to be "first" or "second" may explicitly or implicitly include one or more features. In the description of the present disclosure, unless otherwise stated, "a plurality of" means two or more than two.

In the description of the present disclosure, it should be noted that, unless otherwise explicitly specified or defined, the terms such as "mount", "connect", and "connection" should be understood in a broad sense. For example, the connection may be a fixed connection, a detachable connection, or an integral connection; or the connection may be a mechanical connection, or an electrical connection; or the connection may be a direct connection, an indirect connection through an intermediary, or an internal connection between two elements. A person of ordinary skill in the art may understand the specific meanings of the foregoing terms in the present disclosure according to specific situations.

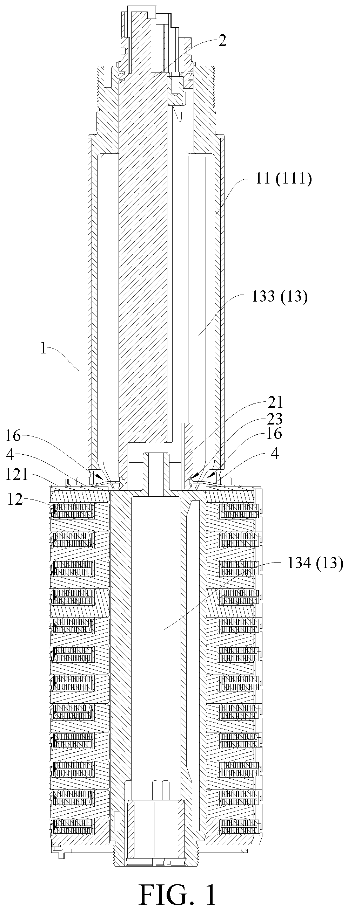

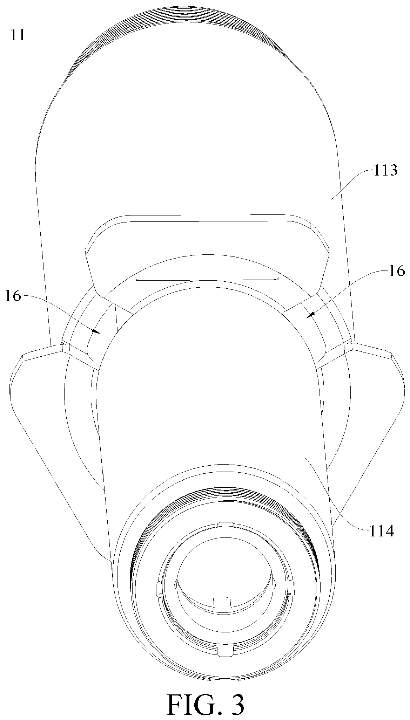

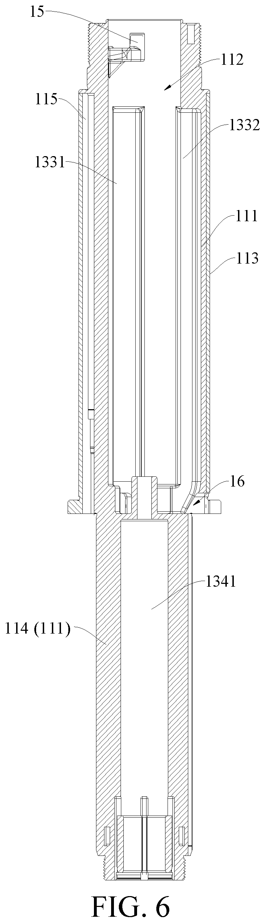

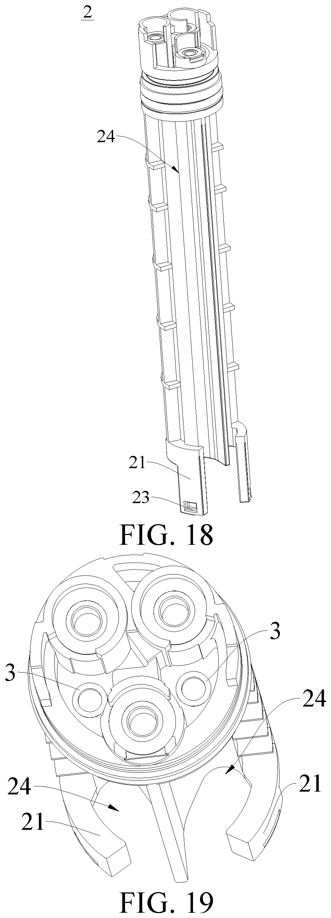

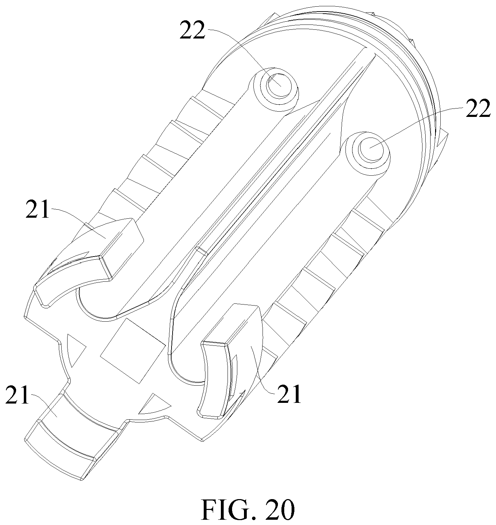

A linear motor according to the embodiments of the present disclosure is described below with reference to FIG. 1 to FIG. 20.

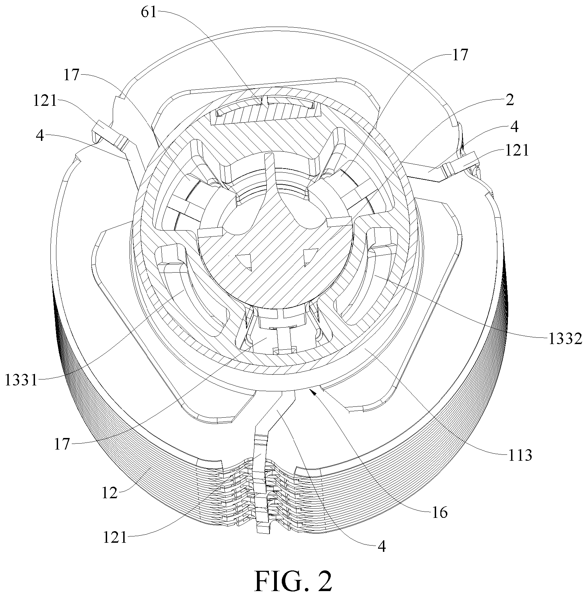

With reference to FIG. 1 and FIG. 2, the linear motor according to the present disclosure includes: a primary assembly 1 and a conductive component 2. The primary assembly 1 includes a core shaft 11 and a winding component 12 sleeved outside the core shaft 11. The core shaft 11 includes a shaft wall 111 and a first chamber 112 surrounded by the shaft wall 111. A cooling water channel 13 is arranged in the shaft wall 111. The conductive component 2 is arranged in the first chamber 112. An end of the conductive component 2 is connected to the winding component 12, and the other end of the conductive component 2 is electrically connected to a motor controller.

Specifically, the first chamber 112 is formed in the core shaft 11. The first chamber 112 may be configured to mount the conductive component 2. The winding component 12 is sleeved on a radial outer side of the core shaft 11. An axial end of the conductive component 2 may be electrically connected to the winding component 12, and the other axial end of the conductive component 2 may be electrically connected to the motor controller.

Further, the cooling water channel 13 is arranged in the shaft wall 111 of the core shaft 11. That is, the cooling water channel 13 is defined by the shaft wall 111 of the core shaft 11. The cooling water channel 13 is arranged adjacent to the conductive component 2, and the cooling water channel 13 is filled with a coolant. The coolant can exchange heat with the conductive component 2, to improve a heat dissipation effect of the conductive component 2, and the coolant can exchange heat with the winding component 12 at the same time, to ensure a heat dissipation effect of the winding component 12.

The cooling water channel 13 and the conductive component 2 are both arranged in the core shaft 11, which is conducive to improving space utilization of the core shaft 11, making the structure of the core shaft 11 more compact, and is conducive to achieving a miniaturized design of the core shaft 11. In addition, since the cooling water channel 13 is defined by the shaft wall 111 of the core shaft 11, there is no need to arrange an additional tube, which is conducive to achieving a lightweight design of the linear motor. Moreover, the cooling water channel 13 has good sealing performance, which can effectively avoid liquid leakage of the cooling water channel 13, improve an isolation effect between the conductive component 2 and the coolant, and improve the safety of the linear motor.

According to the linear motor of the present disclosure, the cooling water channel 13 and the conductive component 2 are both arranged in the core shaft 11, which is conducive to improving the space utilization of the core shaft 11, making the structure of the core shaft 11 more compact, and is conducive to achieving the miniaturized design of the linear motor. The cooling water channel 13 is defined by the shaft wall 111 of the core shaft 11, which improves the integration of the core shaft 11. There is no need to arrange an additional tube, which is conducive to achieving the lightweight design of the linear motor, and can simplify the components of the linear motor. Moreover, the cooling water channel 13 has good sealing performance, which can effectively avoid liquid leakage of the cooling water channel 13, improve the isolation effect between the conductive component 2 and the coolant, and improve the safety of the linear motor. In addition, the coolant can exchange heat with the conductive component 2 and the winding component 12 at the same time, thereby improving the heat dissipation effects of the conductive component 2 and the winding component 12.

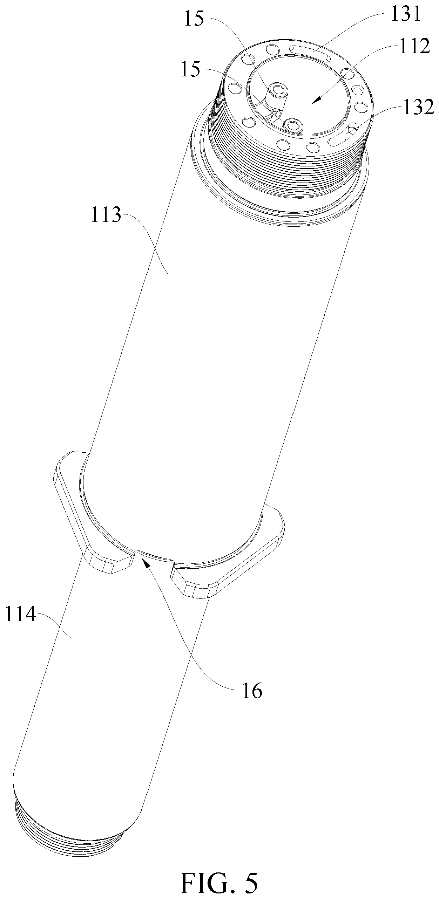

With reference to FIG. 5, FIG. 6, and FIG. 7, in some embodiments of the present disclosure, the cooling water channel 13 is provided with a liquid inlet 131 and a liquid outlet 132.

Specifically, the cooling water channel 13 is provided with the liquid inlet 131 and the liquid outlet 132. The liquid inlet 131 and the liquid outlet 132 are in communication with an entire-vehicle cooling circuit of a vehicle, so that a closed cooling circulation circuit may be formed between the cooling water channel 13 and the entire-vehicle cooling circuit. The coolant may flow into the cooling water channel 13 from the entire-vehicle cooling circuit through the liquid inlet 131, and may circulate in the cooling water channel 13, thereby absorbing heat of the winding component 12 and the conductive component 2, to implement a heat dissipation function on the winding component 12 and the conductive component 2. The coolant after heat absorption may flow out of the cooling water channel 13 through the liquid outlet 132.

As shown in FIG. 5, in some embodiments of the present disclosure, the liquid inlet 131 and the liquid outlet 132 are located on a same end surface of the core shaft 11.

Specifically, the liquid inlet 131 and the liquid outlet 132 are located on the same end surface of the core shaft 11, so that the liquid inlet 131 and the liquid outlet 132 are in communication with the entire-vehicle cooling circuit. The liquid inlet 131 and the liquid outlet 132 may be arranged at an end of the core shaft 11 that is away from the winding component 12 in an axial direction. The end of the core shaft 11 that is away from the winding component 12 in the axial direction has a mounting space, which facilitates arrangement of a sealing structure. The sealing structure is arranged to seal the liquid inlet 131 and the liquid outlet 132 with the entire-vehicle cooling circuit, to avoid liquid leakage at a position between where the liquid inlet 131 and the liquid outlet 132 are in communication with the entire-vehicle cooling circuit.

With reference to FIG. 1, FIG. 5, FIG. 6, FIG. 7, and FIG. 13, in some embodiments of the present disclosure, the cooling water channel 13 includes a first cooling channel 133 and a second cooling channel 134. The first cooling channel 133 is configured to exchange heat with the conductive component 2, and the second cooling channel 134 is configured to exchange heat with the winding component 12.

Specifically, the first cooling channel 133 is arranged opposite to the conductive component 2 in a radial direction, and the coolant in the first cooling channel 133 may exchange heat with the conductive component 2, to implement the heat dissipation function on the conductive component 2. The second cooling channel 134 is arranged opposite to the winding component 12 in the radial direction, and the second cooling channel 134 is located on a radial inner side of the winding component 12. The second cooling channel 134 may exchange heat with the winding component 12 on the inner side of the winding component 12, to implement the heat dissipation function on the winding component 12.

With reference to FIG. 1, FIG. 3, and FIG. 4, in some embodiments of the present disclosure, the core shaft 11 includes a first shaft section 113 and a second shaft section 114. A shaft diameter of the first shaft section 113 is greater than a shaft diameter of the second shaft section 114. The conductive component 2 is arranged in the first shaft section 113. The winding component 12 is sleeved on the second shaft section 114.

Specifically, a bottom end of the first shaft section 113 is connected to a top end of the second shaft section 114. Since the shaft diameter of the first shaft section 113 is greater than the shaft diameter of the second shaft section 114, the conductive component 2 may be arranged in the first shaft section 113, to ensure a sufficient mounting space of the conductive component 2. The winding component 12 is sleeved on a radial outer side of the second shaft section 114. An end of the conductive component 2 that is close to the second shaft section 114 in the axial direction is electrically connected to the winding component 12. The conductive component 2 is arranged in the first shaft section 113, to electrically connect the conductive component 2 to the winding component 12 and the motor controller.

A three-phase copper bar is arranged in the conductive component 2, and the three-phase copper bar is electrically connected to the winding component 12 and the motor controller respectively.

Further, with reference to FIG. 1, FIG. 6, and FIG. 13, the first cooling channel 133 is arranged on the first shaft section 113, to ensure that the coolant in the first cooling channel 133 can exchange heat with the conductive component 2. The second cooling channel 134 is arranged on the second shaft section 114, to ensure that the coolant in the second cooling channel 134 can exchange heat with the winding component 12.

In some embodiments of the present disclosure, the first cooling channel 133 is in communication with the second cooling channel 134.

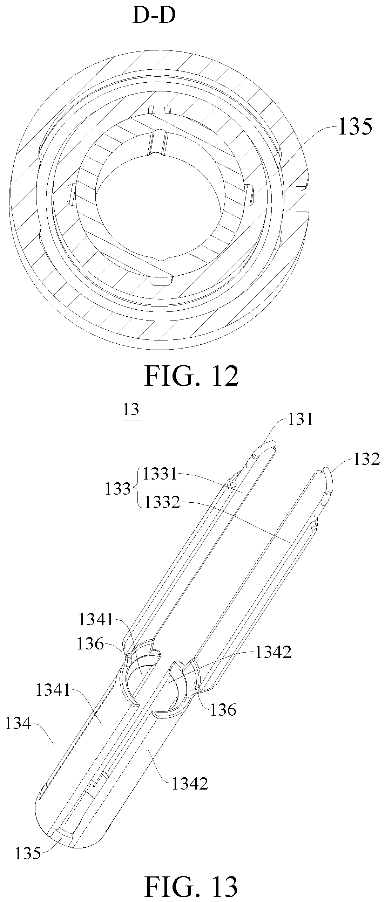

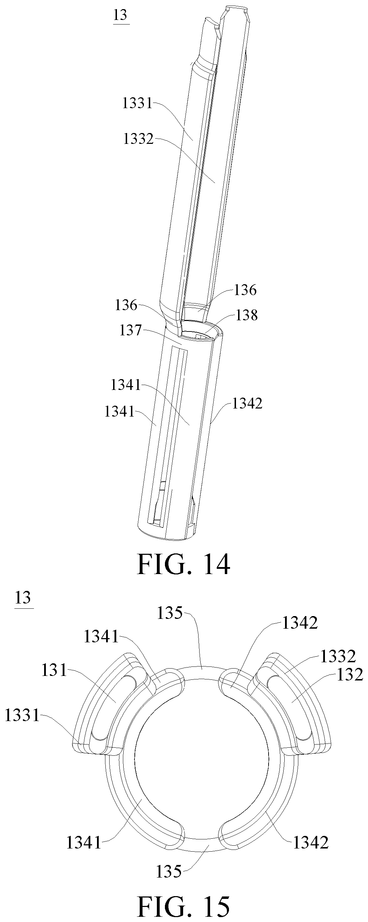

Specifically, with reference to FIG. 5, FIG. 13, and FIG. 15, the liquid inlet 131 and the liquid outlet 132 are provided at an end of the first shaft section 113 that is away from the second shaft section 114 in the axial direction, and the liquid inlet 131 and the liquid outlet 132 are in communication with the first cooling channel 133. Therefore, the coolant may enter the first cooling channel 133 through the liquid inlet 131. With reference to FIG. 13 and FIG. 14, an end of the first cooling channel 133 that is away from the liquid inlet 131 and the liquid outlet 132 is in communication with the second cooling channel 134. After entering the first cooling channel 133, the coolant may further flow into the second cooling channel 134. After exchanging heat with the winding component 12 in the second cooling channel 134, the coolant may flow back into the first cooling channel 133, and then flow into the entire-vehicle cooling circuit through the liquid outlet 132.

With reference to FIG. 13 to FIG. 15, in some embodiments of the present disclosure, the first cooling channel 133 includes a first water inlet section 1331 and a first water outlet section 1332. The second cooling channel 134 includes a plurality of second water inlet sections 1341 and a plurality of second water outlet sections 1342. An end of the first water inlet section 1331 is in communication with first ends of the plurality of second water inlet sections 1341. Second ends of the plurality of second water inlet sections 1341 are in communication with first ends of the plurality of second water outlet sections 1342. Second ends of the plurality of second water outlet sections 1342 are in communication with the first water outlet section 1332.

Specifically, an end of the first water inlet section 1331 that is away from the second shaft section 114 in the axial direction is in communication with the liquid inlet 131, and an end of the first water outlet section 1332 that is away from the second shaft section 114 in the axial direction is in communication with the liquid outlet 132. Therefore, the coolant may enter the first water inlet section 1331 through the liquid inlet 131, and may be discharged from the cooling water channel 13 through the first water outlet section 1332 and the liquid outlet 132 sequentially after heat exchange. The first water inlet section 1331 and the first water outlet section 1332 may both exchange heat with the conductive component 2, and the first water inlet section 1331 and the first water outlet section 1332 are spaced away in a circumferential direction, to ensure a heat exchange effect of the first cooling channel 133 on the conductive component 2, thereby ensuring uniform heat exchange of the conductive component 2.

Further, a plurality of second water inlet sections 1341 are provided. The plurality of second water inlet sections 1341 are arranged spaced away in the circumferential direction. An end of each of the plurality of second water inlet sections 1341 that is close to the first water inlet section 1331 is in communication with an end of the first water inlet section 1331 that is away from the liquid inlet 131. An end of the second water inlet section 1341 that is away from the first water inlet section 1331 is in communication with the second water outlet section 1342. A plurality of second water outlet sections 1342 are provided. The plurality of second water outlet sections 1342 are arranged spaced away in the circumferential direction. An end of each of the plurality of second water outlet sections 1342 that is close to the first water outlet section 1332 is in communication with an end of the first water outlet section 1332 that is away from the liquid outlet 132.

The coolant may flow into the plurality of second water inlet sections 1341 through the first water inlet section 1331 and flow into the second water outlet section 1342 from the second water inlet section 1341. The second water inlet section 1341 and the second water outlet section 1342 may both exchange heat with the winding component 12. The plurality of second water inlet sections 1341 and the plurality of second water outlet sections 1342 are provided to improve a heat exchange effect of the second cooling channel 134 on the winding component 12. In addition, the plurality of second water inlet sections 1341 are arranged spaced away in the circumferential direction and the plurality of second water outlet sections 1342 are arranged spaced away in the circumferential direction, to ensure uniform heat dissipation of the winding component 12.

The coolant after exchanging heat with the winding component 12 may flow into the first water outlet section 1332 from the second water outlet section 1342, and be discharged from the cooling water channel 13 through the liquid outlet 132.

With reference to FIG. 12 to FIG. 15, in some embodiments of the present disclosure, the second cooling channel 134 further includes a communication section 135. The communication section 135 is arranged at a bottom end of the second shaft section 114 and is arranged in an arc shape. The communication section 135 is configured to communicate the second water inlet section 1341 with the second water outlet section 1342. The coolant in the second water inlet section 1341 may flow into the second water outlet section 1342 through the communication section 135.

Optionally, the communication section 135 may further communicate the plurality of second water inlet sections 1341 with each other and communicate the plurality of second water outlet sections 1342 with each other, which is conducive to improving flow efficiency of the coolant.

As shown in FIG. 15, in some embodiments of the present disclosure, a center angle corresponding to two circumferential ends of each of the plurality of second water inlet sections 1341 is greater than a center angle corresponding to two circumferential ends of the first water inlet section 1331; and/or a center angle corresponding to two circumferential ends of each of the plurality of second water outlet sections 1342 is greater than a center angle corresponding to two circumferential ends of the first water outlet section 1332.

Specifically, on a projection surface of the core shaft 11 in the axial direction, the first water inlet section 1331, the first water outlet section 1332, the second water inlet section 1341, and the second water outlet section 1342 are all in an arc shape, and the plurality of second water inlet sections 1341 jointly form a first arc. A center angle corresponding to two ends of the first arc in the circumferential direction is greater than a center angle corresponding to two circumferential ends of the first water inlet section 1331. That is, a sum of areas of the plurality of second water inlet sections 1341 in the circumferential direction is greater than an area of the first water inlet section 1331 in the circumferential direction, thereby increasing a heat exchange area of the second cooling channel 134, and improving the heat exchange effect of the second cooling channel 134 on the winding component 12.

On the projection surface of the core shaft 11 in the axial direction, the plurality of second water outlet sections 1342 jointly form a second arc. A center angle corresponding to two ends of the second arc in the axial direction is greater than a center angle corresponding to two circumferential ends of the first water outlet section 1332. That is, a sum of areas of the plurality of second water outlet sections 1342 in the circumferential direction is greater than an area of the first water outlet section 1332 in the circumferential direction, thereby increasing the heat exchange area of the second cooling channel 134, and improving the heat exchange effect of the second cooling channel 134 on the winding component 12.

Optionally, only the center angle corresponding to the two circumferential ends of each of the plurality of second water inlet sections 1341 is greater than the center angle corresponding to the two circumferential ends of the first water inlet section 1331; only the center angle corresponding to the two circumferential ends of each of the plurality of second water outlet sections 1342 is greater than the center angle corresponding to the two circumferential ends of the first water outlet section 1332; or the center angle corresponding to the two circumferential ends of each of the plurality of second water inlet sections 1341 is greater than the center angle corresponding to the two circumferential ends of the first water inlet section 1331, and the center angle corresponding to the two circumferential ends of each of the plurality of second water outlet sections 1342 is greater than the center angle corresponding to the two circumferential ends of the first water outlet section 1332, to further increase the heat exchange area of the second cooling channel 134, thereby improving the heat exchange effect of the second cooling channel 134 on the winding component 12.

Certainly, it may be understood that specific arrangement of the plurality of second water inlet sections 1341 and the plurality of second water outlet sections 1342 may be determined according to an actual heat exchange requirement of the winding component 12. This is not specifically limited herein.

Referring to FIG. 14, in some embodiments of the present disclosure, a water inlet converging section 137 is arranged between the first water inlet section 1331 and the plurality of second water inlet sections 1341, and the first water inlet section 1331 is circumferentially close to a side of the water inlet converging section 137; and/or a water outlet converging section 138 is arranged between the first water outlet section 1332 and the plurality of second water outlet sections 1342, and the first water outlet section 1332 is circumferentially close to a side of the water outlet converging section 138.

Specifically, the water inlet converging section 137 is arranged at the end of the second water inlet section 1341 that is close to the first water inlet section 1331 in the axial direction, and the water inlet converging section 137 is in communication with the plurality of second water inlet sections 1341 respectively. The coolant may flow into the plurality of second water inlet sections 1341 at the same time through the water inlet converging section 137, and two ends of the water inlet converging section 137 may be in communication with two second water inlet sections 1341 respectively. The first water inlet section 1331 is arranged on a side close to the water inlet converging section 137 in the circumferential direction and is in communication with the water inlet converging section 137. That is, the first water inlet section 1331 may be in direct communication with one of the plurality of second water inlet sections 1341 in the axial direction, which is conducive to ensuring a flow effect of the coolant.

The water outlet converging section 138 is arranged at the end of the second water outlet section 1342 that is close to the first water outlet section 1332 in the axial direction, and the water outlet converging section 138 is in communication with the plurality of second water outlet sections 1342 respectively. The coolant in the plurality of second water outlet sections 1342 may flow into the first water outlet section 1332 through the water outlet converging section 138, and two ends of the water outlet converging section 138 may be in communication with two second water outlet sections 1342 respectively. The first water outlet section 1332 is arranged on a side close to the water outlet converging section 138 in the circumferential direction and is in communication with the water outlet converging section 138. That is, the first water outlet section 1332 may be in direct communication with one of the plurality of second water outlet sections 1342 in the axial direction, which is conducive to ensuring the flow effect of the coolant.

Optionally, the water inlet converging section 137 and the water outlet converging section 138 may be both arranged on the core shaft 11, and the water inlet converging section 137 and the water outlet converging section 138 are arranged spaced away and are not in communication with each other, to further improve the flow effect of the coolant and facilitate sufficient heat exchange between the coolant and the winding component 12.

With reference to FIG. 13 and FIG. 14, in some embodiments of the present disclosure, two flow guiding sections 136 are arranged between the first cooling channel 133 and the second cooling channel 134.

Specifically, one flow guiding section 136 is arranged between the first water inlet section 1331 and the water inlet converging section 137. The flow guiding section 136 extends in an arc shape in the axial direction. The flow guiding section 136 may communicate the first water inlet section 1331 with the water inlet converging section 137 in the axial direction. The flow guiding section 136 is configured in an arc shape to guide the coolant, thereby further improving the flow effect of the coolant.

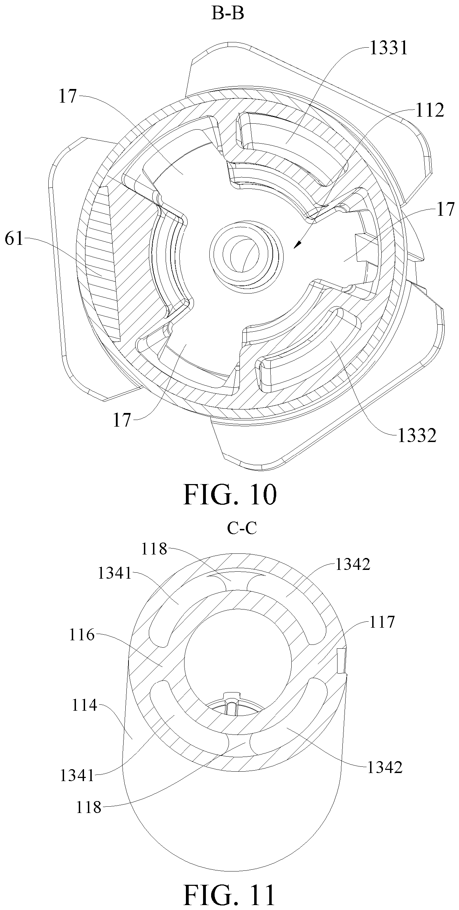

As shown in FIG. 11, in some embodiments of the present disclosure, a first rib 116 is arranged between two adjacent second water inlet sections 1341; and/or a second rib 117 is arranged between two adjacent second water outlet sections 1342; and/or a third rib 118 is arranged between the adjacent second water inlet section 1341 and second water outlet section 1342.

Specifically, the first rib 116 is configured to separate the two adjacent second water inlet sections 1341, to prevent the coolant from directly flowing between the two adjacent second water inlet sections 1341 in the radial direction, and increase a flow path of the coolant, so that the coolant can fully exchange heat with the winding component 12. In addition, the first rib 116 may support the shaft wall 111 of the core shaft 11 in the radial direction, thereby improving structural strength of the core shaft 11.

The second rib 117 is configured to separate the two adjacent second water inlet sections 1341, to prevent the coolant from directly flowing between the two adjacent second water outlet sections 1342 in the radial direction, increase the flow path of the coolant, and improve the heat exchange effect of the coolant on the winding component 12. In addition, the second rib 117 may support the shaft wall 111 of the core shaft 11 in the radial direction, thereby improving the structural strength of the core shaft 11.

The third rib 118 may separate the adjacent second water inlet section 1341 and second water outlet section 1342 in the circumferential direction, to prevent the coolant from directly flowing from the second water inlet section 1341 to the second water outlet section 1342 in the radial direction, increase the flow path of the coolant, and improve the heat exchange effect of the coolant on the winding component 12. In addition, the third rib 118 may support the shaft wall 111 of the core shaft 11 in the radial direction, thereby improving the structural strength of the core shaft 11.

Optionally, one of the first rib 116, the second rib 117, and the third rib 118 may be arranged on the core shaft 11; or any two of the first rib 116, the second rib 117, and the third rib 118 may be arranged on the core shaft 11; or the first rib 116, the second rib 117, and the third rib 118 may all be arranged on the core shaft 11. Specific arrangement of the first rib 116, the second rib 117, and the third rib 118 may be determined according to a structural strength requirement of the core shaft 11 and a heat exchange requirement of the winding component 12. This is not specifically limited herein.

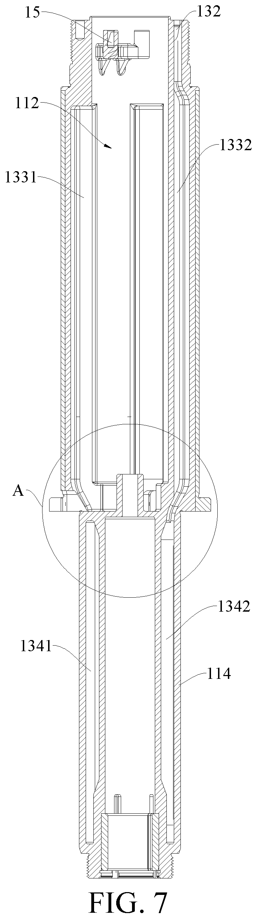

With reference to FIG. 7, FIG. 8, and FIG. 18, in some embodiments of the present disclosure, the first chamber 112 is provided with a first positioning portion 1. The conductive component 2 is provided with a first positioning fit portion 21. The first positioning portion 14 is in positioning fit with the first positioning fit portion 21 to limit a circumferential rotation freedom degree of the conductive component 2.

Specifically, the first chamber 112 is provided with the first positioning portion 14, and the first positioning portion 14 is in positioning fit with the first positioning fit portion 21 on the conductive component 2, to limit the conductive component 2 in the circumferential direction, prevent the conductive component 2 from rotating in the first chamber 112, and improve assembly stability of the conductive component 2.

The first positioning portion 14 may be arranged at an end portion of the first shaft section 113 that is close to the second shaft section 114. Correspondingly, the first positioning fit portion 21 may be arranged at an end of the conductive component 2 that is close to the second shaft section 114, to prevent the first positioning fit portion 21 from interfering with a chamber wall of the first chamber 112 during mounting of the conductive component 2 in the first chamber 112 and affecting assembly of the conductive component 2.

In some embodiments of the present disclosure, one of the first positioning portion 14 and the first positioning fit portion 21 is configured as a positioning protrusion, and the other is configured as a positioning groove.

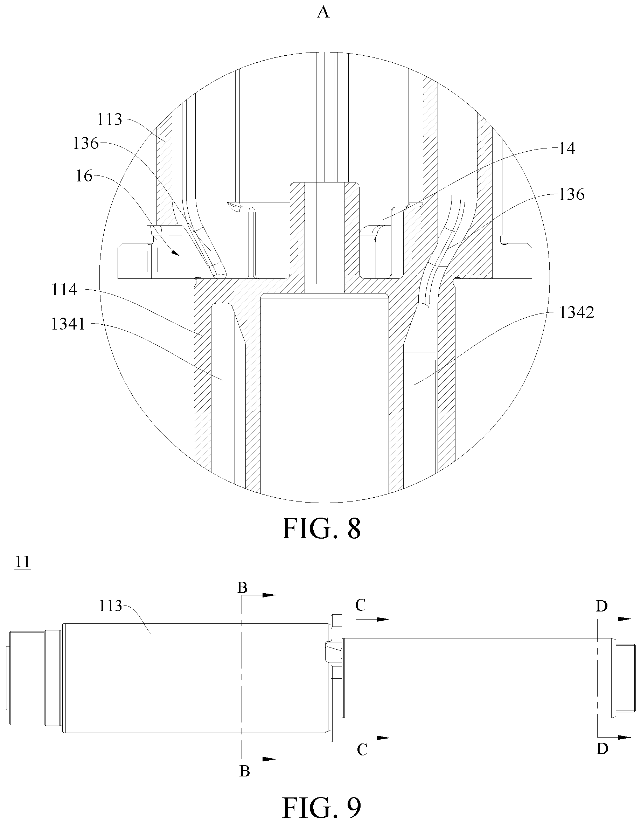

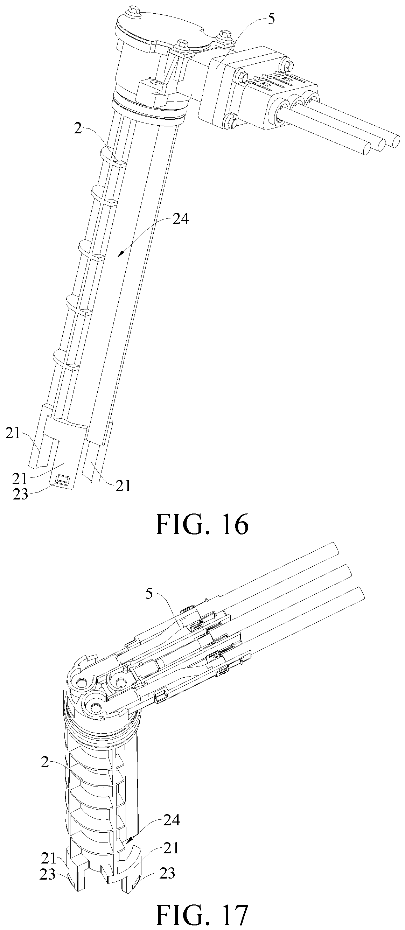

Specifically, with reference to FIG. 7 and FIG. 8, the first positioning portion 14 may be configured as the positioning groove. The positioning groove is recessed toward a direction close to the second shaft section 114 in the axial direction. With reference to FIG. 16 to FIG. 18, the first positioning fit portion 21 may be configured as the positioning protrusion. The positioning protrusion may be provided at the end of the conductive component 2 that is close to the second shaft section 114 in the axial direction, and the positioning protrusion bulges in the direction close to the second shaft section 114 in the axial direction. The positioning protrusion may be inserted into the positioning groove to be in positioning fit with the positioning groove, thereby limiting the circumferential rotation freedom degree of the conductive component 2 and ensuring the assembly stability of the conductive component 2.

Optionally, the first positioning portion 14 may be configured as the positioning protrusion, and the first positioning fit portion 21 may be configured as the positioning groove. This structure achieves the same technical effect as the foregoing structure. Details are not described herein again.

With reference to FIG. 5, FIG. 19, and FIG. 20, in some embodiments of the present disclosure, an end portion of the first chamber 112 is provided with a fixing protrusion 15. The linear motor includes a first fixing connection member 3. The first fixing connection member 3 runs through the fixing protrusion 15 to be fixed to the conductive component 2.

Specifically, an end of the first chamber 112 that is away from the second shaft section 114 is open. The conductive component 2 may be mounted in the first chamber 112 through the open end of the first chamber 112. The fixing protrusion 15 is arranged in the first chamber 112 and is arranged close to the open end of the first chamber 112. That is, the fixing protrusion 15 may be arranged on the shaft wall 111 of the first shaft section 113, and extend from the shaft wall 111 of the first shaft section 113 toward a direction close to a center axis of the first shaft section 113. In addition, the fixing protrusion 15 bulges toward the open end of the first chamber 112 in the axial direction.

Further, an end of the conductive component 2 that is away from the first positioning fit portion 21 in the axial direction is provided with a connection portion 22. When the conductive component 2 is mounted on the first shaft section 113, the connection portion 22 is directly opposite to the fixing protrusion 15. The first fixing connection member 3 sequentially runs through the connection portion 22 and the fixing protrusion 15, and fixedly connects the connection portion 22 to the fixing protrusion 15, so that the conductive component 2 can be fixedly connected to the core shaft 11, thereby improving assembly reliability of the conductive component 2.

The first fixing connection member 3 may be configured as a threaded connection member, such as a bolt or a screw. The fixing protrusion 15 is formed with a threaded hole. Similarly, the connection portion 22 may be configured as a threaded hole, so as to fixedly connect the conductive component 2 to the core shaft 11 through the first fixing connection member 3.

With reference to FIG. 17 to FIG. 19, in some embodiments of the present disclosure, an avoidance groove 24 is formed on the conductive component 2 at a position opposite to the fixing protrusion 15, and the avoidance groove 24 extends along the axial direction. During mounting of the conductive component 2 in the first chamber 112, the conductive component 2 slides from the open end of the first chamber 112 toward the second shaft section 114, and the fixing protrusion 15 may slide in the avoidance groove 24 at the same time, so that the conductive component 2 and the fixing protrusion 15 may avoid each other, to avoid affecting the assembly of the conductive component 2 due to interference between the fixing protrusion 15 and the conductive component 2.

In some embodiments of the present disclosure, the fixing protrusion 15 and the core shaft 11 are an integrally formed piece, to improve integration of the core shaft 11 and simplify assembly of components of the primary assembly 1. Therefore, assembly of components of the linear motor can be simplified, which is conducive to improving production assembly efficiency of the linear motor.

With reference to FIG. 2 to FIG. 4, FIG. 7, and FIG. 8, in some embodiments of the present disclosure, a lead-out wire 121 of the winding component 12 is located on a radial outer side of the core shaft 11. The linear motor further includes an electrical connection member 4. The shaft wall 111 of the core shaft 11 is formed with a communication hole 16. The electrical connection member 4 runs through the communication hole 16 and is electrically connected to the lead-out wire 121 and the conductive component 2 respectively.

Specifically, the shaft wall 111 of the core shaft 11 is formed with the communication hole 16. The communication hole 16 runs through the shaft wall 111. An end of the electrical connection member 4 runs through the communication hole 16 and extends into the first chamber 112 to be connected to the conductive component 2. The other end of the electrical connection member 4 runs through the communication hole 16 and is connected to the lead-out wire 121 located on the radial outer side of the core shaft 11, so that the winding component 12 can be electrically connected to the motor controller through the conductive component 2.

With reference to FIG. 2 to FIG. 4, FIG. 7, and FIG. 8, in some embodiments of the present disclosure, the communication hole 16 is located at a bottom of the first chamber 112.

Specifically, the winding component 12 is sleeved on a radial outer side of the second shaft section 114. The lead-out wire 121 of the winding component 12 is located on the radial outer side of the second shaft section 114. The communication hole 16 runs through the shaft wall 111 of the first shaft section 113 in the radial direction and is in communication with the first chamber 112. The communication hole 16 is provided at an end of the first shaft section 113 that is close to the second shaft section 114. That is, the communication hole 16 is located at the bottom of the first chamber 112. In this way, the electrical connection member 4 runs through the communication hole 16 and is electrically connected to the lead-out wire 121 and the conductive component 2 respectively, which is conducive to shortening a length of the electrical connection member 4 and reducing costs required for producing the electrical connection member 4.

With reference to FIG. 16 to FIG. 18, in some embodiments of the present disclosure, an end of the conductive component 2 that is close to the second shaft section 114 is provided with the positioning protrusion. A connection groove 23 is provided on the positioning protrusion. An end of the electrical connection member 4 extends into the first chamber 112 through the communication hole 16 and is further inserted into the connection groove 23 and welded to a three-phase copper bar of the conductive component 2, to implement the electrical connection between the electrical connection member 4 and the conductive component 2. Similarly, the other end of the electrical connection member 4 is welded to the lead-out wire 121 of the winding component 12, to implement the electrical connection between the electrical connection member 4 and the lead-out wire 121.

With reference to FIG. 16 and FIG. 17, an electrical plug connector 5 is arranged at an end of the conductive component 2 that is away from the winding component 12. The conductive component 2 may be electrically connected to the motor controller through the electrical plug connector 5.

With reference to FIG. 2, FIG. 9, and FIG. 10, in some embodiments of the present disclosure, the core shaft 11 is provided with a wire outlet hole 17. The wire outlet hole 17 is provided at the end of the first shaft section 113 that is close to the second shaft section 114. The wire outlet hole 17 is in communication with the communication hole 16 and is provided directly opposite to the connection groove 23. After running through the communication hole 16, the electrical connection member 4 may extend into the connection groove 23 through the wire outlet hole 17 to be electrically connected to the conductive component 2.

The wire outlet hole 17 may extend in the axial direction, to reduce a weight of the core shaft 11, to achieve the lightweight design of the core shaft 11, which is conducive to achieving the lightweight design of the linear motor.

In some embodiments of the present disclosure, the linear motor further includes: a secondary assembly coupled to the primary assembly 1, the secondary assembly being movable relative to the primary assembly; and a detection device, the detection device being configured to detect a position of the secondary assembly.

Specifically, the secondary assembly is configured in a cylindrical shape and is sleeved on a radial outer side of the primary assembly 1. The secondary assembly is coupled to the primary assembly 1 to reciprocally move relative to the primary assembly 1, thereby driving a load to achieve a linear movement.

Further, the detection device can detect a position change of the secondary assembly when moving relative to the primary assembly 1, to determine an operating status of the linear motor, which is conducive to improving operation stability of the linear motor.

In some embodiments of the present disclosure, the detection device includes a sensing member 61 and a read head. The sensing member 61 is arranged on the core shaft 11. The read head is arranged on the secondary assembly. The read head is coupled to the sensing member 61 to detect the position of the secondary assembly.

Specifically, during operation of the linear motor, a relative movement occurs between the secondary assembly and the primary assembly 1. The sensing member 61 and the read head are arranged to detect a position change between the primary assembly 1 and the secondary assembly during the relative movement, to determine the operating status of the linear motor, which is conducive to improving the operation stability of the linear motor.

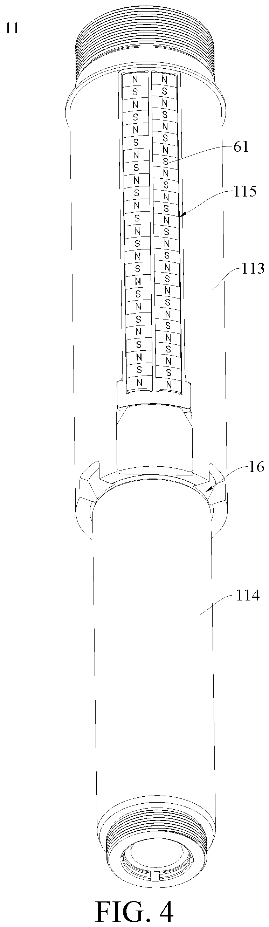

With reference to FIG. 2 and FIG. 4, in some embodiments of the present disclosure, an outer peripheral wall of the core shaft 11 is provided with a placement groove 115. The placement groove 115 is recessed from the outer peripheral wall of the core shaft 11 toward a direction close to the first chamber 112. The placement groove 115 extends along an axial direction of the core shaft 11. The sensing member 61 is arranged in the placement groove 115, so as to facilitate assembly of the sensing member 61 on the core shaft 11. For example, during mounting of the sensing member 61, the sensing member 61 may be inserted into the placement groove 115, thereby improving assembly convenience of the sensing member 61 and improving assembly accuracy of the sensing member 61.

The sensing member 61 may be configured as a sensor magnetic strip, and a plurality of sensor magnetic strips are provided. The plurality of sensor magnetic strips are sequentially arranged along the axial direction of the core shaft 11. The read head may read magnetic field information of the sensor magnetic strips to determine the position of the secondary assembly.

With reference to FIG. 2, FIG. 9, and FIG. 10, in some embodiments of the present disclosure, the placement groove 115 is staggered with the cooling water channel 13.

Specifically, in a circumferential direction of the core shaft 11, the placement groove 115 is staggered with the first water inlet section 1331 and the first water outlet section 1332 in the circumferential direction. That is, the placement groove 115 may be located between the first water inlet section 1331 and the first water outlet section 1332 in the circumferential direction and arranged spaced away from the first water inlet section 1331 and the first water outlet section 1332 in the circumferential direction.

In addition, the placement groove 115 is staggered with the plurality of second water inlet sections 1341 and the plurality of second water outlet sections 1342 in the circumferential direction. That is, the placement groove may be located between the adjacent second water inlet section 1341 and second water outlet section 1342 in the circumferential direction, and be spaced away from the second water inlet section 1341 and the second water outlet section 1342 in the circumferential direction.

In this way, a circumferential space of the core shaft 11 can be fully utilized, so that the sensing member 61 and the cooling water channel 13 can be properly arranged, and structural compactness of the core shaft 11 can be improved while a detection effect and a cooling effect are ensured. The placement groove 115 is staggered with the cooling water channel 13, which can effectively prevent the shaft wall 111 of the core shaft 11 from being excessively thin, thereby improving the structural strength of the core shaft 11.

An electromagnetic suspension according to the present disclosure includes the foregoing linear motor.

The electromagnetic suspension includes the foregoing linear motor, and the cooling water channel 13 and the conductive component 2 are both arranged in the core shaft 11, which is conducive to improving the space utilization of the core shaft 11, making the structure of the core shaft 11 more compact, and is conducive to achieving the miniaturized design of the linear motor. The cooling water channel 13 is defined by the shaft wall 111 of the core shaft 11, which improves integration of the core shaft 11. There is no need to arrange an additional tube, which is conducive to achieving the lightweight design of the linear motor, and can simplify the components of the linear motor. Moreover, the cooling water channel 13 has good sealing performance, which can effectively avoid liquid leakage of the cooling water channel 13, improve the isolation effect between the conductive component 2 and the coolant, and improve the safety of the linear motor. In addition, the coolant can exchange heat with the conductive component 2 and the winding component 12 at the same time, thereby improving the heat dissipation effects of the conductive component 2 and the winding component 12.

A vehicle according to the present disclosure includes the foregoing electromagnetic suspension.

The vehicle includes the foregoing electromagnetic suspension, the electromagnetic suspension includes the foregoing linear motor, and the cooling water channel 13 and the conductive component 2 are both arranged in the core shaft 11, which is conducive to improving the space utilization of the core shaft 11, making the structure of the core shaft 11 more compact, and is conducive to achieving the miniaturized design of the linear motor. The cooling water channel 13 is defined by the shaft wall 111 of the core shaft 11, which improves the integration of the core shaft 11. There is no need to arrange an additional tube, which is conducive to achieving the lightweight design of the linear motor, and can simplify the components of the linear motor. Moreover, the cooling water channel 13 has good sealing performance, which can effectively avoid liquid leakage of the cooling water channel 13, improve the isolation effect between the conductive component 2 and the coolant, and improve the safety of the linear motor. In addition, the coolant can exchange heat with the conductive component 2 and the winding component 12 at the same time, thereby improving the heat dissipation effects of the conductive component 2 and the winding component 12.

In description of the present disclosure, description of reference terms such as "one embodiment", "some embodiments", "exemplary embodiment", "example", "specific example" or "some examples" means including specific features, structures, materials, or features described in the embodiment or example in at least one embodiment or example of the present disclosure. In this specification, schematic descriptions of the foregoing terms are not necessarily directed at a same embodiment or example. In addition, the described specific feature, structure, material, or characteristic may be combined in a proper manner in any one or more embodiments or examples.

Although the embodiments of the present disclosure have been shown and described, persons of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A linear motor, comprising:
a primary assembly (1), the primary assembly (1) comprising a core shaft (11) and a winding component (12) sleeved outside the core shaft (11), the core shaft (11) comprising a shaft wall (111) and a first chamber (112) surrounded by the shaft wall (111), and a cooling water channel (13) being arranged in the shaft wall (111); and
a conductive component (2), the conductive component (2) being arranged in the first chamber (112), an end of the conductive component (2) being connected to the winding component (12), and another end of the conductive component (2) being configured to electrically connected to a motor controller.

2. The linear motor according to claim 1, wherein the cooling water channel (13) is provided with a liquid inlet (131) and a liquid outlet (132).

3. The linear motor according to claim 2, wherein the liquid inlet (131) and the liquid outlet (132) are located on a same end surface of the core shaft (11).

4. The linear motor according to claim 1, wherein the cooling water channel (13) comprises a first cooling channel (133) and a second cooling channel (134), the first cooling channel (133) is configured to exchange heat with the conductive component (2), and the second cooling channel (134) is configured to exchange heat with the winding component (12).

5. The linear motor according to claim 4, wherein the core shaft (11) comprises a first shaft section (113) and a second shaft section (114), a shaft diameter of the first shaft section (113) is greater than a shaft diameter of the second shaft section (114), the conductive component (2) is arranged in the first shaft section (113), and the winding component (12) is sleeved on the second shaft section (114); and
the first cooling channel (133) is arranged on the first shaft section (113), and the second cooling channel (134) is arranged on the second shaft section (114).

6. The linear motor according to claim 4, wherein the first cooling channel (133) is in communication with the second cooling channel (134).

7. The linear motor according to claim 6, wherein the first cooling channel (133) comprises a first water inlet section (1331) and a first water outlet section (1332), the second cooling channel (134) comprises a plurality of second water inlet sections (1341) and a plurality of second water outlet sections (1342), an end of the first water inlet section (1331) is in communication with first ends of the plurality of second water inlet sections (1341), second ends of the plurality of second water inlet sections (1341) are in communication with first ends of the plurality of second water outlet sections (1342), and second ends of the plurality of second water outlet sections (1342) are in communication with the first water outlet section (1332).

8. The linear motor according to claim 7, wherein a center angle corresponding to two circumferential ends of each of the plurality of second water inlet sections (1341) is greater than a center angle corresponding to two circumferential ends of the first water inlet section (1331); and/or
a center angle corresponding to two circumferential ends of each of the plurality of second water outlet sections (1342) is greater than a center angle corresponding to two circumferential ends of the first water outlet section (1332).

9. The linear motor according to claim 7, wherein a water inlet converging section (137) is arranged between the first water inlet section (1331) and the plurality of second water inlet sections (1341), and the first water inlet section (1331) is circumferentially close to a side of the water inlet converging section (137); and/or
a water outlet converging section (138) is arranged between the first water outlet section (1332) and the plurality of second water outlet sections (1342), and the first water outlet section (1332) is circumferentially close to a side of the water outlet converging section (138).

10. The linear motor according to claim 7, wherein a first rib (116) is arranged between two adjacent second water inlet sections (1341); and/or
a second rib (117) is arranged between two adjacent second water outlet sections (1342); and/or
a third rib (118) is arranged between the adjacent second water inlet section (1341) and second water outlet section (1342).

11. The linear motor according to claim 1, wherein the first chamber (112) is provided with a first positioning portion (14), the conductive component (2) is provided with a first positioning fit portion (21), and the first positioning portion (14) is in positioning fit with the first positioning fit portion (21) to limit a circumferential rotation freedom degree of the conductive component (2),
preferably wherein one of the first positioning portion (14) and the first positioning fit portion (21) is configured as a positioning protrusion, and the other is configured as a positioning groove;
or wherein an end portion of the first chamber (112) is provided with a fixing protrusion (15), the linear motor comprises a first fixing connection member (3), and the first fixing connection member (3) runs through the fixing protrusion (15) to be fixed to the conductive component (2),
more preferably wherein the fixing protrusion (15) and the core shaft (11) are an integrally formed piece.

12. The linear motor according to claim 1, wherein a lead-out wire (121) of the winding component (12) is located on a radial outer side of the core shaft (11); and
the linear motor further comprises an electrical connection member (4), the shaft wall (111) of the core shaft (11) is formed with a communication hole (16), and the electrical connection member (4) runs through the communication hole (16) and is electrically connected to the lead-out wire (121) and the conductive component (2) respectively,
preferably wherein the communication hole (16) is located at a bottom of the first chamber (112).

13. The linear motor according to any one of claims 1 to 12, further comprising:
a secondary assembly coupled to the primary assembly (1), the secondary assembly being movable relative to the primary assembly; and
a detection device, the detection device being configured to detect a position of the secondary assembly,
preferably wherein the detection device comprises a sensing member (61) and a read head, the sensing member (61) is arranged on the core shaft (11), the read head is arranged on the secondary assembly, and the read head is coupled to the sensing member (61) to detect the position of the secondary assembly,
more preferably wherein an outer peripheral wall of the core shaft (11) is provided with a placement groove (115), and the sensing member (61) is placed in the placement groove (115),
most preferably wherein the placement groove (115) is staggered with the cooling water channel (13).

14. An electromagnetic suspension, comprising the linear motor according to any one of claims 1 to 13.

15. A vehicle, comprising the electromagnetic suspension according to claim 14.
